# EUROPEAN PATENT SPECIFICATION

(11) **EP 0 462 672 B1**
(45) Date of publication and mention of the grant of the patent: **02.03.1994**
(21) Application number: 91201504.7
(22) Date of filing: 14.06.1991
(51) Int. Cl.: F16L 9/12, B32B 1/08

(54) **Multi-layered tube, piping consisting of several such tubes and method for the gas-tight and liquid-tight connection of two such tubes**
Mehrlagiges Rohr, Leitung aus mehreren solchen Rohren und Verfahren zur fluiddichten Verbindung zweier solcher Rohre
Tuyau composite, conduite comportant plusieurs de ces tuyaux, méthode pour le raccordement étanche aux gaz et aux liquides de deux de ces tuyaux

(30) Priority: 18.06.1990 NL 9001384
(43) Date of publication of application: 27.12.1991
(73) Proprietor: WAVIN B.V., NL-8011 CW Zwolle (NL)
(72) Inventor: Gaikema, Gjalt Martinus, NL-7701 LC Dedemsvaart (NL); Bijl, Paulus, NL-7772 JX Hardenberg (NL)
(74) Representative: Barendregt, Frank, Drs.

(56) References cited:
- EP-A- 0 079 745
- DE-A- 2 016 121
- DE-C- 3 527 440
- DE-U- 8 627 865
- FR-A- 2 320 825
- US-A- 4 544 732

## Description

The present invention relates to a composite tube, at least comprising a thermosetting resin-containing inner layer and outer layer, at least one of the layers comprising reinforcement fibres.

Such a tube is for instance described in DE-A-2 016 121. Said tube comprises an outer jacket and an inner jacket, which are respectively comprised of a fibre-reinforced thermosetting resin, and a thermosetting resin in which a thermoplastic resin is completely dispersed. This tube will have a high resistance to breaking and cracking, like all fibre-reinforced thermosetting tubes. It also prevents the build up of stresses in the inner tube by the incorporation of said thermoplastic resin. However it does not have an adequate resistance to attack by chemicals, such as aromatic hydrocarbons or the like. Swelling and consequent permeability for chemicals may therefore occur.

The present invention aims to overcome the abovementioned disadvantages and to this end has the characteristic that both the inner layer and outer layer consist of fibre-reinforced cured thermosetting resin, and the resins of the inner layer and outer layer being cured using different curing agents.

Many thermosetting resin systems are known, such as unsaturated polyester resin, epoxy resin, phenolic resin, alkyd resin, urea resin, melamine resin and the like, which in principle are suitable for forming tubes.

In this respect reference is made to EP-A-0 079 745. In this European application compositions of matter are described, being the product of an amassment of two arrays of filaments, each array of filaments being impregnated with a resin system comprising a thermosetting resin, a curing agent and an accelerator. Each accelerator accelerates the curing agent of the other resin system. The two arrays of impregnated filaments are e.g. brought together to provide intimate contact and are subsequently simultaneously wound around a mandrel to manufacture leafsprings.

Primarily, the invention provides a tube which, as a result of the fibre reinforcement, already has a high strength at a low thickness. In addition, the curing agent for the resin in the relevant layer can be chosen depending on the use of the tube. Thus, some curing agents are suitable for rendering a layer of the tube resistant to chemicals but, for example, from the toxicological standpoint are not permitted for the inner layer of drinking water pipings. The curing agents can, for example, be chosen in order to protect the medium to be transported through the tube against the external environment or in order to protect the external environment against the medium to be transported. The latter can, for example, be important if a tube for the transport of chemicals must be laid in a water catchment area. For the sake of convenience, only the use of the tube according to the invention as a drinking water piping in a contaminated soil will be discussed in the remainder of the description.

The fibre-reinforced cured thermosetting resin can contain many types of fibres, such as nonwoven synthetic fibres or nonwoven glass fibres, and the like.

The thermosetting resin used is advantageously an epoxy resin, since this type of resin is exceptionally suitable for reinforcement with fibres and has a low permeability.

The plastic of the outer layer is preferably resistant to chemicals, so that the composite tube according to the invention can be used as a drinking water piping in areas contaminated with chemicals, such as the sites of petrol stations, oil refineries and the like, without swelling as a result of any aromatic hydrocarbons or the like and enabling penetration of the chemicals into the interior of the tube.

To this end, the outer layer advantageously consists of a glass fibre fabric impregnated with epoxy resin, the epoxy resin being cured using an aromatic amine as curing agent, preferably diaminodiphenylmethane (MDA). The use of an aromatic amine as curing agent for the epoxy resin in the outer layer has the advantage that said outer layer is, as a result, better resistant to miscellaneous hydrocarbons which usually cause plastics such as polyalkenes to swell and thus make said plastics porous. If the outer layer should become porous, the drinking water in the tube can become accessible to contaminations.

Advantageously, the inner layer consists of wound glass fibre fabric impregnated with an epoxy resin and the epoxy resin of this layer is cured using an aliphatic amine or anhydride as curing agent, isophoronediamine (IPD) being the most preferred curing agent. The use of an aliphatic amine or anhydride as curing agent for the epoxy resin of the inner layer has the advantage that the tube according to the invention can be used as a water piping since from the toxicological standpoint the use of an aliphatic amine as curing agent for plastic tubes is accepted in the majority of countries and even the use of anhydride as curing agent is accepted in a number of countries.

In order to protect the glass fibres of the epoxy resin-impregnated glass fibre fabric of the inner layer against the penetration of water or any other medium to be transported, that partial layer of the inner layer which is located furthest to the inside preferably has a higher concentration of plastic than the other part of the inner layer.

The tube according to the invention can be formed in many ways, but this is in particular carried out by winding or centrifugal casting. These techniques are relatively simple and provide a fibre orientation which, as a result of the usually backwards and forwards build-up of a layer, is highly beneficial for the final strength of the tube.

In order to provide the tube with additional protection against the penetration of chemicals, a metal layer is advantageously incorporated between the inner layer and outer layer of the tube.

A composite tube of this type which has a metal layer between the inner layer and outer layer is known per se from German Patent No. 3527440. In this patent a method is described for the production of a gas-tight and liquid-tight connection between a plastic tube provided with a metal reinforcement and a plastic connecting piece, the plastic tube at least consisting of a plastic inner layer and outer layer with a metal jacket between these. For connection of the plastic tube to a connecting piece, the plastic outer jacket and the metal reinforcement are removed from the connecting region of the plastic tube and the exposed inner layer is fed into the connecting piece and connected therewith. Pipings produced in this way are used for the transport of drinking water in contaminated areas.

Tubes of this type are, however, relatively thick and expensive, especially for larger diameters. A tube of this type with a metal reinforcement is, moreover, difficult to produce since this must be carried out by co-extrusion or a similar complicated technique. Moreover, the plastics which are used for the outer layer, such as, for example, polypropylene, do not have adequate resistance to aromatic hydrocarbons. As a result, the plastic is able to swell, which results in said plastic becoming porous and the metal layer becoming accessible to water and, for example, acids. The latter will corrode the metal layer, as a result of which the protective effect of the composite tube against the penetration of contaminations is highly impaired.

The invention provides a tube which is protected against the penetration of chemicals and in which the metal layer provides an additional protection against diffusion. The metal layer is preferably formed by winding of a metal foil.

The metal foil is usually wound so that the windings overlap, the overlap preferably being more than 25%. The overlapping winding of the metal foil prevents chemicals which may have been able to penetrate through the outer layer of the tube from being able to penetrate at the seams. Moreover, winding with overlap is simpler than winding a foil so that the windings adjoin. A preferred metal foil is aluminium foil.

Preferably, the ends of the tube according to the invention are suitable for enabling the coupling of several tubes to one another. For this purpose, one end can be provided with a socket and the other end can be treated in such a way that at least the outer layer and, if present, the metal layer are removed locally around the circumference of the tube at the relevant end. It is thus possible easily to connect the tube according to the invention to other tubes according to the invention or to conventional tubes to form piping.

The invention also relates to a piping consisting of tubes, which is characterised in that the said piping comprises several tubes according to the invention.

It will be clear that the invention does not relate exclusively to tubes, but that connectors such as T-pieces and bends can be built up in the same way as the tube according to the invention and then possess the same advantageous characteristics.

Finally, the invention relates to a method for the gas-tight and liquid-tight connection of two tubes according to the invention, this method being characterised in that a push-in end of another tube is fixed in a socket of one tube with the aid of an adhesive, the push-in end of the other tube being locally treated in order to remove the outer layer and, if present, the metal layer from the push-in section, after which a metal layer provided with an adhesive is wound around the connection thus formed and fibre-reinforced plastic is then wound over this, which plastic is then cured.

The implementation of this method provides a connection which is exceptionally gas-tight and liquid-tight and in respect of the cross-section structure does not deviate a great deal from the cross-section structure of the tubes themselves. This signifies that as a result of the method according to the invention any penetration of chemicals at the connection section is avoided.

Advantageously, a finish layer is applied over the fibre-reinforced plastic layer, this finish layer preferably consisting of a polyester nonwoven impregnated with epoxy resin. The use of a finish layer, such as, for example, a polyester nonwoven or other synthetic nonwoven provides an additional protection against attack by chemicals which would possibly be able to attack the fibres of the plastic reinforced therewith.

The invention will be illustrated below with reference to the appended drawing. In this drawing:
Fig. 1 shows a partial cross-section through a composite tube according to the invention which has a metal layer; and
Fig. 2 shows a partial cross-section through a connection of two tubes according to the invention.

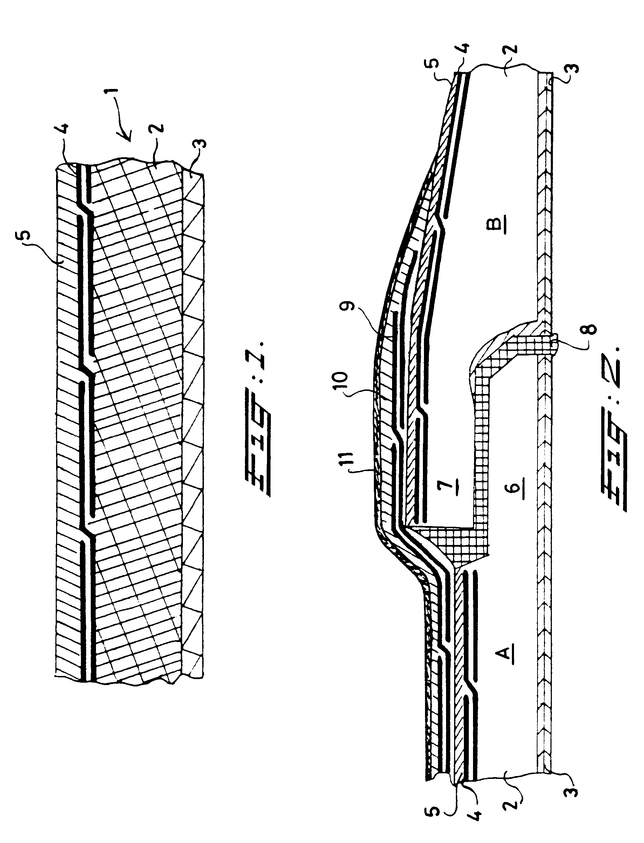

Fig. 1 shows a cross-section through the wall of a tube 1 according to the invention. The reference numeral 2 indicates the inner layer of the tube, which, for example, consists of a wound glass-fibre fabric, which is impregnated with an epoxy resin, which is cured with isophoronediamine. On the underside of this inner layer there is a so-called "liner" 3, which has the same composition as the inner layer 2 but in which the resin concentration is higher, for example approximately 60% instead of approximately 30%.

A metal layer, which is formed by winding of a metal foil 4, is located on the inner layer 2. This metal foil 4 is preferably aluminium foil which is provided with an adhesive, which enters into a connection with the inner layer 2. The outer layer 5, which, for example, can consist of a wound glass fibre fabric, which is impregnated with epoxy resin, which, for example, is cured with diaminodiphenylmethane, is present on the aluminium foil.

Usually, the successive layers are wound crosswise over a mandrel, after which the plastic is completely cured. The inner layer and outer layer usually consist of several wound layers, the inner layer usually being thicker than the outer layer.

It will be clear that the method by which the tube just described is produced is also suitable for use for connecting pieces, such as bends, T-pieces and the like.

The said tube and connecting pieces are exceptionally suitable for use as a water piping in areas which are severely contaminated with chemicals, such as, for example, the sites of petrol stations, oil refineries and the like, although by switching the inner layer and outer layer other applications are also possible, for example the transport of chemicals through water catchment areas.

Fig. 2 shows a partial cross-section of a connection between two tubes according to the invention; in this figure the same components as in Fig. 1 are indicated by the same reference numerals. This connection relates to a connection between tube A, which is fixed with a push-in section 6 in socket 7 of tube B. To this end, the outer layer 5 and the metal foil 4 are removed from push-in section 6 and the fixing is carried out with the aid of an adhesive 8. A metal foil 9 is first wound locally over the connection thus formed, which metal foil is provided with an adhesive which forms a connection with the upper layers of the tubes A and B. A fibre-reinforced plastic layer 10 is then wound over the metal foil and is then cured. This treatment of the connection can be carried out on site in the field or in the factory. A finish layer 11, which, for example, can consist of a wound polyester nonwoven impregnated with curable epoxy resin, can also be applied in order to protect the supplementary fibre-reinforced plastic layer 10 on the metal foil 9.

The metal foil used is preferably 70-100 mm wide aluminium foil, which is wound with a 50% overlap. Furthermore, the aluminium foil is preferably provided on one side with an adhesive. An example of an aluminium foil of this type is the Scotch type 431, 70 mm wide, foil from 3M.

The inner layer and outer layer of the tube according to the invention are preferably wound crosswise, with a winding angle of ± 55°, using a glass fibre fabric which is impregnated with an epoxy resin, the epoxy resin being cured using a curing agent which is suitable for the relevant application. This signifies that the curing agent which is used in the inner layer must, for example, be toxicologically acceptable for drinking water if the tube is used as a water piping, and the curing agent for the outer layer must render the outer layer better resistant to attack by chemicals from the environment in which the tube has to be placed, which chemicals could possibly cause the epoxy resin of the outer layer to swell.

## Claims

1. Composite tube, at least comprising a thermosetting resin-containing inner layer and outer layer at least one of the layers comprising reinforcement fibres, characterised in that both the inner layer and outer layer (2, 4) consist of fibre-reinforced cured thermosetting resin, and the resins of the inner layer and outer layer being cured using different curing agents.

2. Tube according to Claim 1, characterised in that the thermosetting resin employed is an epoxy resin.

3. Tube according to Claim 2, characterised in that the epoxy resin in the outer layer (5) is cured using an aromatic amine as curing agent.

4. Tube according to Claim 3, characterised in that the curing agent used is diaminodiphenylmethane (MDA).

5. Tube according to Claim 2, characterised in that the epoxy resin in the inner layer (2) is cured using an aliphatic amine or anhydride as curing agent.

6. Tube according to Claim 5, characterised in that the curing agent used is isophoronediamine (IPD).

7. Tube according to Claims 1-6, characterised in that that partial layer (3) of the inner layer (2) which is located furthest to the inside has a higher concentration of plastic than the other part of the inner layer (2).

8. Tube according to Claims 1-7, characterised in that the inner layer and outer layer are formed by winding or centrifugal casting.

9. Tube according to Claim 8, characterised in that a metal layer is incorporated between the inner layer and outer layer.

10. Tube according to Claim 9, characterised in that the metal layer is formed by winding of a metal foil.

11. Tube according to Claim 10, characterised in that the metal foil (4) is wound so that the windings overlap, the overlap preferably being more than 25%.

12. Tube according to Claim 11, characterised in that the metal layer consists of wound aluminium foil.

13. Tube according to Claims 1-12, characterised in that the ends thereof are suitable for enabling coupling of several tubes to one another.

14. Tube according to Claim 13, characterised in that said tube is provided with a socket (7) at one end.

15. Tube according to Claim 13, characterised in that the other end (6) is treated in such a way that at least the outer layer (5) and, if present, the metal layer (4) are removed locally around the circumference of the tube at the relevant end.

16. Piping consisting of tubes, characterised in that said piping comprises several tubes according to one or more of the preceding claims.

17. Method for the gas-tight and liquid-tight connection of two tubes according to Claims 13 to 15, in which a push-in end (6) of another tube (A) is fixed in a socket (7) of one tube (B) with the aid of an adhesive (8), the push-in end (6) of the other tube (A) being locally treated in order to remove the outer layer (5) and, if present, the metal layer (4) from the section (6) to be pushed in, after which a metal layer (9) provided with an adhesive is wound, so that it overlaps, around the connection thus formed and fibre-reinforced plastic (10) is then wound over this, which plastic is then cured.

18. Method according to Claim 17, characterised in that a finish layer (11) is applied over the fibre-reinforced plastic layer (10).

19. Method according to Claim 18, characterised in that the finish layer (11) consists of a wound epoxy impregnated polyester nonwoven.

## Patentansprüche

1. Verbundrohr, zumindest bestehend aus einer duroplasthaltigen Innenschicht und Außenschicht, wobei zumindest eine der Schichten Verstärkungsfasern aufweist, dadurch gekennzeichnet, daß sowohl die Innenschicht als auch die Außenschicht (2,4) aus einem faserverstärkten gehärteten Duroplast-Kunststoff besteht und die Kunststoffe der Innenschicht und Außenschicht unter Verwendung unterschiedlicher Härtungsmittel gehärtet sind.

2. Rohr nach Anspruch 1, dadurch gekennzeichnet, daß das verwendete Duroplast ein Epoxidharz ist.

3. Rohr nach Anspruch 2, dadurch gekennzeichnet, daß das Eopxidharz in der Außenschicht (5) unter Verwendung eines aromatischen Amins als Härtungsmittel gehärtet ist.

4. Rohr nach Anspruch 3, dadurch gekennzeichnet, daß das verwendete Härtungsmittel Diamindiphenylmethan (MDA) ist.

5. Rohr nach Anspruch 2, dadurch gekennzeichnet, daß das Epoxidharz in der Innenschicht (2) unter Verwendung eines aliphatischen Amins oder Anhydrids als Härtungsmittel gehärtet ist.

6. Rohr nach Anspruch 5, dadurch gekennzeichnet, daß das verwendete Härtungsmittel Isophorondiamin (IPD) ist.

7. Rohr nach den Ansprüchen 1 bis 6, dadurch gekennzeichnet, daß diejenige Teilschicht (3) der Innenschicht (2), die am weitesten zur Innenseite hin angeordnet ist, eine höhere Kunststoffkonzentration als der andere Teil der Innenschicht (2) hat.

8. Rohr nach den Ansprüchen 1 bis 7, dadurch gekennzeichnet, daß die Innenschicht und Außenschicht durch Wickeln oder Schleuderguß gebildet sind.

9. Rohr nach Anspruch 8, dadurch gekennzeichnet, daß eine Metallschicht zwischen die Innenschicht und Außenschicht eingebaut ist.

10. Rohr nach Anspruch 9, dadurch gekennzeichnet, daß die Metallschicht durch Wickeln einer Metallfolie gebildet ist.

11. Rohr nach Anspruch 10, dadurch gekennzeichnet, daß die Metallfolie (4) so gewickelt ist, daß die Windungen einander überlappen, und die Überlappung vorzugsweise mehr als 25% beträgt.

12. Rohr nach Anspruch 11, dadurch gekennzeichnet, daß die Metallschicht aus gewickelter Aluminiumfolie besteht.

13. Rohr nach den Ansprüchen 1 bis 12, dadurch gekennzeichnet, daß seine Enden zur Ermoglichung einer Verbindung mehrerer Rohre miteinander geeignet sind.

14. Rohr nach Anspruch 13, dadurch gekennzeichnet, daß das Rohr an einem Ende mit einer Muffe (7) versehen ist.

15. Rohr nach Anspruch 13, dadurch gekennzeichnet, daß das andere Ende (6) derart behandelt ist, daß zumindest die Außenschicht (5) und, falls vorhanden, die Metallschicht (4) am Umfang des Rohres an dem jeweiligen Ende örtlich entfernt sind.

16. Aus Rohren bestehende Leitung, dadurch gekennzeichnet, daß die Leitung mehrere Rohre nach einem oder mehreren der vorhergehenden Ansprüche umfaßt.

17. Verfahren für die gasdichte und flüssigkeitsdichte Verbindung zweier Rohre gemäß den Ansprüchen 13 bis 15, bei dem ein Einsteckende (6) eines anderen Rohres (A) in einer Muffe (7) eines Rohres (B) mit Hilfe eines Klebstoffs (8) festgelegt wird, das Einsteckende (6) des anderen Rohres (A) örtlich behandelt wird, um die Außenschicht (5) und, falls vorhanden, die Metallschicht (4) von dem einzusteckenden Teil (6) zu entfernen, wonach eine mit einem Klebstoff versehene Metallschicht (9) so, daß sie sich überlappt, um die so gebildete Verbindung herumgewickelt wird und dann ein faserverstärkter Kunststoff (10) über diese gewickelt wird, welcher Kunststoff dann gehärtet wird.

18. Verfahren nach Anspruch 17, dadurch gekennzeichnet, daß eine Deckschicht (11) über der faserverstärkten Kunststoffschicht (10) aufgebracht wird.

19. Verfahren nach Anspruch 18, dadurch gekennzeichnet, daß die Deckschicht (11) aus einem epoxidgetränkten Polyester-Nonwoven besteht.

## Revendications

1. Tuyau composite, comprenant au moins une couche intérieure et une couche extérieure contenant une résine thermodurcissable, au moins une des couches comprenant des fibres de renforcement, caractérisé en ce que la couche intérieure et la couche extérieure (2, 4) se composent toutes deux de résine thermodurcissable durcie et renforcée par fibres, les résines de la couche intérieure et de la couche extérieure étant durcies à l'aide de différents agents de durcissement.

2. Tuyau selon la revendication 1, caractérisé en ce que la résine thermodurcissable utilisée est une résine époxy.

3. Tuyau selon la revendication 2, caractérisé en ce que la résine époxy dans la couche extérieure (5) est durcie à l'aide d'une amine aromatique comme agent de durcissement.

4. Tuyau selon la revendication 3, caractérisé en ce que l'agent de durcissement utilisé est du diaminodiphénylméthane (MDA).

5. Tuyau selon la revendication 2, caractérisé en ce que la résine époxy dans la couche intérieure (2) est durcie à l'aide d'amine aliphatique ou d'anhydride comme agent de durcissement.

6. Tuyau selon la revendication 5, caractérisé en ce que l'agent de durcissement utilisé est de l'isophoronediamine (IPD).

7. Tuyau selon les revendications 1 à 6, caractérisé en ce que la couche partielle (3) de la couche intérieure (2) qui est placée le plus à l'intérieur présente une concentration de plastique supérieure par rapport à l'autre partie de la couche intérieure (2).

8. Tuyau selon les revendications 1 à 7, caractérisé en ce que la couche intérieure et la couche extérieure sont formées par enroulement ou par coulage par centrifugation.

9. Tuyau selon la revendication 8, caractérisé en ce qu'une couche de métal est incorporé entre la couche intérieure et la couche extérieure.

10. Tuyau selon la revendication 9, caractérisé en ce que la couche de métal est formée par enroulement d'une feuille de métal.

11. Tuyau selon la revendication 10, caractérisé en ce que la feuille de métal (4) est enroulée de telle sorte que les enroulements se chevauchent, le chevauchement étant, de préférence, supérieur à 25%.

12. Tuyau selon la revendication 11, caractérisé en ce que la couche de métal se compose d'une feuille d'aluminium enroulée.

13. Tuyau selon les revendications 1 à 12, caractérisé en ce que les extrémités de ce dernier sont appropriées pour permettre d'accoupler plusieurs tuyaux entre eux.

14. Tuyau selon la revendication 13, caractérisé en ce que ledit tuyau est pourvu d'un manchon (7) à une extrémité.

15. Tuyau selon la revendication 13, caractérisé en ce que l'autre extrémité (6) est durcie de telle manière qu'au moins la couche extérieure (5) et , si elle est prévue, la couche de métal (4) sont retirées localement autour de la circonférence du tuyau à l'extrémité appropriée.

16. Conduite se composant de tuyaux, caractérisée en ce que ladite conduite comprend plusieurs tuyaux selon une ou plusieurs des revendications précédentes.

17. Procédé pour le raccordement étanche aux gaz et aux liquides de deux tuyaux, selon les revendications 13 à 15, dans lequel une extrémité à emmancher (6) d'un autre tuyau (A) est fixée dans un manchon (7) d'un tuyau (B) à l'aide d'un adhésif (8), l'extrémité à emmancher (6) de l'autre tuyau (A) étant localement traitée afin de retirer la couche extérieure (5) et lorsqu'elle est prévue, la couche de métal (4) de la section (6) à emmancher, après quoi une couche de métal (9) pourvue d'un adhésif est enroulée, de telle sorte qu'elle se chevauche, autour du raccordement ainsi formé, et du plastique renforcé par fibres (10) est ensuite enroulé sur ce dernier, lequel plastique est ensuite durci.

18. Procédé selon la revendication 17, caractérisé en ce qu'une couche de finition (11) est appliquée sur la couche de plastique renforcée par fibres (10).

19. Procédé selon la revendication 18, caractérisé en ce que la couche de finition (11) se compose d'un non-tissé de polyester imprégné d'époxy, enroulé.
